# EUROPEAN PATENT APPLICATION

(11) **EP 3 370 322 A1**
(43) Date of publication of application: **05.09.2018**
(21) Application number: 16859232.7
(22) Date of filing: 10.08.2016
(51) Int. Cl.: H02J 3/46, H02J 3/38, H02J 7/00, H02J 7/35, H02J 9/06

(54) **POWER CONVERSION SYSTEM AND CONTROL DEVICE**

(30) Priority: 28.10.2015 JP 2015211540
(71) Applicant: Panasonic Intellectual Property Management Co., Ltd., Osaka-shi, Osaka 540-6207 (JP)
(72) Inventor: TERAMOTO, Yuichiro, Osaka-shi, Osaka 540-6207 (JP); TOYONAGA, Tomohiko, Osaka-shi, Osaka 540-6207 (JP); IWASAKI, Toshiya, Osaka-shi, Osaka 540-6207 (JP); NAKASHIMA, Takeshi, Osaka-shi, Osaka 540-6207 (JP)
(74) Representative: Appelt, Christian W.
(86) International application number: PCT/JP2016/003701
(87) International publication number: WO 2017/072991

(57) **Abstract**

In a power conversion system (10), a first control unit (12a) acquires monitor data from a first power storage unit (20a), notifies a second control unit (12b) of a remaining capacity of the first power storage unit (20a), and sets an output voltage of a first DC-AC conversion unit (11a). The second control unit (12b) controls an output current of a second DC-AC conversion unit (11b) to bring the remaining capacity of the first power storage unit (20a) and a remaining capacity of the second power storage unit (20b) closer to each other on the basis of a total current supplied to a load (2), the remaining capacity of the first power storage unit (20a), and the remaining capacity of the second power storage unit (20b).

## Description

### [TECHNICAL FIELD]

The present invention relates to a power conversion system that converts direct-current (DC) power to alternating-current (AC) power and also relates to a control device used in a power conversion system.

### [BACKGROUND ART]

When a plurality of power storage systems provided with storage batteries, photovoltaic power generating systems, and so on are installed, there is a system in which a plurality of power storage systems cooperate to supply power to a load upon a switch being made from a grid-connected mode to a self-sustained operation mode due to a power failure or the like. In this system, a power storage system serving as a master (hereinafter, referred to as a main power storage system) supplies power to the load at a predetermined voltage, and another power storage system serving as a slave (hereinafter, referred to as an auxiliary power storage system) superposes a current onto an output of the main power storage system. Thus, the plurality of power storage systems cooperate (see, for example, Patent Document 1).

The main power storage system outputs, of a current to be consumed at the load, a current that is less by a current to be output from the auxiliary power storage system. Typically, a current output from each of the power storage systems is controlled to a value obtained by dividing the current to be consumed at the load by the number of the power storage systems connected in parallel. For example, in a system with one main power storage system and one auxiliary power storage system, a current is supplied to a load at a current ratio of 1:1.

[patent document 1] JP2005-295707

### [PROBLEM TO BE SOLVED BY THE INVENTION]

In the plurality of power storage systems described above, when the capacity of the main power storage system reaches a lower limit, it becomes impossible to specify a load voltage even in a state in which the capacity of the auxiliary power storage system has not reached a lower limit. Thus, the auxiliary power storage system stops operating as well.

The present invention has been made to address such an issue and is directed to providing a power conversion system and a control device that, in a case in which a plurality of power conversion systems connected in parallel cooperate to supply power to a load, make it possible to continue to supply power to the load for as long duration as possible.

### [MEANS TO SOLVE THE PROBLEM]

To solve the above problem, a power conversion system according to an aspect of the present invention includes a first DC-AC conversion unit that converts DC power supplied from a first power storage unit to AC power, a first control unit that acquires monitor data from the first power storage unit and controls the first DC-AC conversion unit, a second DC-AC conversion unit that converts DC power supplied from a second power storage unit to AC power, and a second control unit that acquires monitor data from the second power storage unit and controls the second DC-AC conversion unit. The first DC-AC conversion unit and the second DC-AC conversion unit each have an AC output path, and the AC output paths are coupled together. A total current of an AC output current of the first DC-AC conversion unit and an AC output current of the second DC-AC conversion unit is supplied to a load. The first control unit sets an output voltage of the first DC-AC conversion unit and notifies the second control unit of a remaining capacity of the first power storage unit. The second control unit controls an output current of the second DC-AC conversion unit to bring the remaining capacity of the first power storage unit and a remaining capacity of the second power storage unit closer to each other on the basis of the total current supplied to the load, the remaining capacity of the first power storage unit, and the remaining capacity of the second power storage unit.

Another aspect of the present invention provides a control device. The control device controls a first DC-AC conversion unit and a second DC-AC conversion unit. The first DC-AC conversion unit is a DC-AC conversion unit having an output voltage set therein and converts DC power supplied from a first power storage unit to AC power. The second DC-AC conversion unit converts DC power supplied from a second power storage unit to AC power. The first DC-AC conversion unit and the second DC-AC conversion unit each have an AC output path, and the AC output paths are coupled together. A total current of an AC output current of the first DC-AC conversion unit and an AC output current of the second DC-AC conversion unit is supplied to a load. The control unit controls an output current of the second DC-AC conversion unit to bring a remaining capacity of the first power storage unit and a remaining capacity of the second power storage unit closer to each other on the basis of the total current supplied to the load, the remaining capacity of the first power storage unit, and the remaining capacity of the second power storage unit.

It is to be noted that any optional combination of the above constituent elements or an embodiment obtained by converting what is expressed by the present invention into a method, an apparatus, a system, and so on is also effective as an embodiment of the present invention.

### [ADVANTAGE OF THE PRESENT INVENTION]

According to the present invention, when a plurality of power storage systems connected in parallel cooperate to supply power to a load, power can continue to be supplied to the load for as long duration as possible.

### [BRIEF DESCRIPTION OF THE DRAWINGS]

Fig. 1 illustrates a configuration of a power storage system according to a first embodiment of the present invention;
Fig. 2 is a flowchart illustrating an example of an operation of the power storage system in a self-sustained operation mode according to the first embodiment;
Fig. 3 illustrates a configuration of a power storage system according to a second embodiment of the present invention;
Figs. 4(a) to 4(c) schematically illustrate control examples of the power storage system in a self-sustained operation mode according to the second embodiment;
Fig. 5 is a table summarizing determination conditions to be used in a specific example of a method for calculating an assist rate according to the second embodiment; and
Fig. 6 is a flowchart for describing the specific example of the method for calculating the assist rate according to the second embodiment.

### [MODE FOR CARRYING OUT THE INVENTION]

### (First Embodiment)

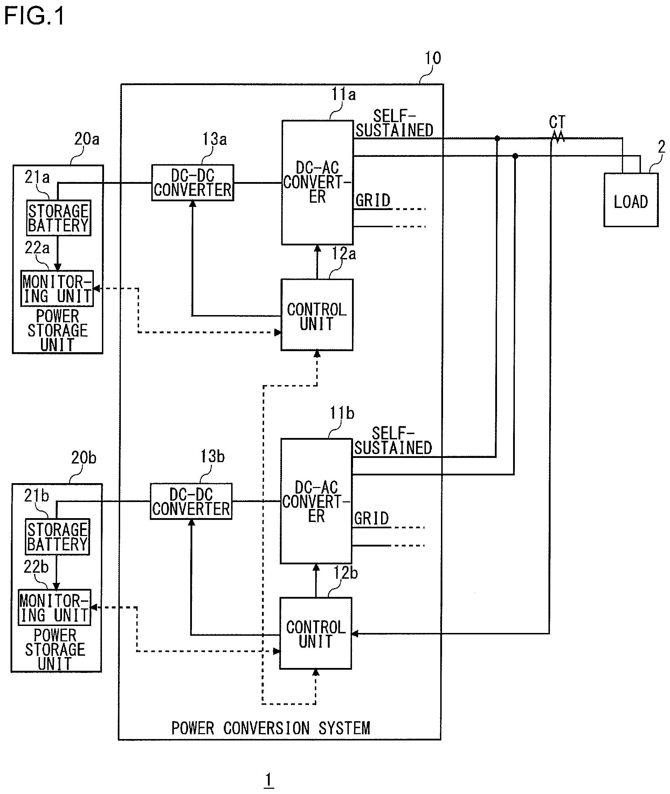

Fig. 1 illustrates a configuration of a power storage system 1 according to a first embodiment of the present invention. The power storage system 1 is provided with a first power storage unit 20a, a second power storage unit 20b, and a power conversion system 10. The power conversion system 10 includes a first DC-AC converter 11a, a first control unit 12a, a first DC-DC converter 13a for a storage battery, a second DC-AC converter 11b, a second control unit 12b, and a second DC-DC converter 13b for a storage battery. The power conversion system 10 is implemented by installing a power conditioner function of the first power storage unit 20a and a power conditioner function of the second power storage unit 20b collectively in a single housing.

The first power storage unit 20a includes a first storage battery 21a and a first monitoring unit 22a. The first storage battery 21a is constituted by a plurality of storage battery cells connected in series or in series-parallel. A lithium-ion storage battery, a nickel-hydrogen storage battery, or the like can be used as a storage battery cell. In place of the first storage battery 21a, an electric double layer capacitor may be used. The first monitoring unit 22a monitors the state (e.g., voltage, current, temperature) of the plurality of storage battery cells and transmits the monitor data of the plurality of storage battery cells to the first control unit 12a via a communication line.

The second power storage unit 20b includes a second storage battery 21b and a second monitoring unit 22b. The configurations and the operations of the second storage battery 21b and the second monitoring unit 22b are similar to the configurations and the operations of the first storage battery 21a and the first monitoring unit 22a, respectively. The type and/or the capacity of the storage battery may differ between the first storage battery 21a and the second storage battery 21b.

The first monitoring unit 22a and the first control unit 12a are connected in serial communication, the second monitoring unit 22b and the second control unit 12b are connected in serial communication, and the first control unit 12a and the second control unit 12b are connected in serial communication. For example, data is communicated in each of the stated pairs in half-duplex communication compliant with the RS-485 standard.

The first DC-DC converter 13a for a storage battery is a bidirectional DC-DC converter and charges/discharges the first storage battery 21a at a voltage value or a current value set by the first control unit 12a. The first DC-AC converter 11a is a bidirectional DC-AC converter. When the first storage battery 21a is being discharged, the first DC-AC converter 11a converts the DC power supplied from the first storage battery 21a via the first DC-DC converter 13a for a storage battery to AC power and outputs the converted AC power. In addition, when the first storage battery 21a is being charged, the first DC-AC converter 11a converts the AC power input from the grid to DC power and outputs the converted DC power. The first DC-AC converter 11a outputs the AC power or the DC power at a voltage value or a current value set by the first control unit 12a.

An AC terminal of the first DC-AC converter 11a is connected selectively to a grid-connection terminal or a self-sustained output terminal in accordance with an instruction from the first control unit 12a. When the power storage system 1 is operating in a grid-connected mode, the AC terminal of the first DC-AC converter 11a is connected to the grid-connection terminal. The grid-connection terminal is connected to the grid through a distribution switchboard (not illustrated).

During a discharging period in the grid-connected mode, the first DC-AC converter 11a converts the DC power supplied from the first power storage unit 20a to AC power and supplies the converted AC power to a load (not illustrated) connected to a distribution line that branches out from the distribution switchboard. The first control unit 12a sets a voltage value corresponding to a grid voltage into the first DC-AC converter 11a or the first DC-DC converter 13a for a storage battery. In addition, the first control unit 12a specifies an operation timing of the first DC-AC converter 11a such that the first DC-AC converter 11a outputs an AC current having a frequency and a phase that are synchronized with those of the AC current supplied to the load from the grid.

During a charging period in the grid-connected mode, the first DC-AC converter 11a converts the AC power supplied from the grid to DC power and supplies the converted DC power to the first power storage unit 20a through the first DC-DC converter 13a for a storage battery. The first control unit 12a sets a current value corresponding to a charging rate into the first DC-AC converter 11a or the first DC-DC converter 13a for a storage battery.

When the power storage system 1 is operating in a self-sustained operation mode, the AC terminal of the first DC-AC converter 11a is connected to the self-sustained output terminal.

The first control unit 12a manages and controls the first power storage unit 20a, the first DC-AC converter 11a, and the first DC-DC converter 13a for a storage battery. The configuration of the first control unit 12a can be implemented by a cooperation of hardware resources and software resources or by hardware resources alone. Examples of the hardware resources that can be used include a CPU, a DSP (Digital Signal Processor), an FPGA (Field-Programmable Gate Array), a ROM, a RAM, and other LSIs. Examples of the software resources that can be used include a program such as firmware.

The first control unit 12a estimates the remaining capacity of the first storage battery 21a on the basis of the monitor data acquired from the first monitoring unit 22a. For example, the first control unit 12a estimates the remaining capacity of the first storage battery 21a by integrating the acquired current values. Alternatively, the first control unit 12a can also estimate the remaining capacity of the first storage battery 21a from an open-circuit voltage (OCV) of the first storage battery 21a. The remaining capacity can be regarded as a dischargeable capacity of the storage battery. The remaining capacity may be specified in a capacitance value [Ah] or may be specified in an SOC (State Of Charge) [%].

Upon detecting a fault such as an overvoltage or an overcurrent on the basis of the monitor data acquired from the first monitoring unit 22a, the first control unit 12a opens a relay (not illustrated) interposed between the first storage battery 21a and the first DC-DC converter 13a for a storage battery to protect the first storage battery 21a.

In addition, the first control unit 12a receives configuration information for peak shaving input by a user through an operation unit (not illustrated). For example, the first control unit 12a receives, as the configuration information for peak shaving, a charging period, a charging rate, a discharging period, and a discharging rate. On the basis of the configuration information, the first control unit 12a controls the first DC-AC converter 11a and the first DC-DC converter 13a for a storage battery. The first storage battery 21a may be used only for backup and not for peak shaving.

The basic operations of the second DC-DC converter 13b for a storage battery, the second DC-AC converter 11b, and the second control unit 12b are similar to the basic operations of the first DC-DC converter 13a for a storage battery, the first DC-AC converter 11a, and the first control unit 12a, respectively.

The grid-connection terminal of the first DC-AC converter 11a and the grid-connection terminal of the second DC-AC converter 11b may be connected to different distribution lines or may be connected to the same distribution line. In the example described hereinafter, the assumption is that the two grid-connection terminals are connected to different distribution lines and that the first DC-AC converter 11a and the second DC-AC converter 11b supply AC power to different loads in the grid-connected mode.

When one of the first control unit 12a and the second control unit 12b detects a power failure, the one that has detected the power failure notifies the other one of an occurrence of the power failure. The first control unit 12a and the second control unit 12b switch the operation mode of the first DC-AC converter 11a and the second DC-AC converter 11b, respectively, from the grid-connected mode to the self-sustained operation mode. Specifically, the first control unit 12a and the second control unit 12b switch the connected ends of the AC terminals of the first DC-AC converter 11a and the second DC-AC converter 11b, respectively, from the grid-connection terminal to the self-sustained output terminal.

In the present embodiment, an AC output path connected to the self-sustained output terminal of the first DC-AC converter 11a and an AC output path connected to the self-sustained output terminal of the second DC-AC converter 11b are coupled together. The coupled AC output path is then connected to a load 2. The load 2 may be a specific load (e.g., illuminating lighting or elevator) that can preferentially receive a supply of power at the time of a power failure or may be a general load. In addition, the coupled AC output path may be connected to an AC socket. At the time of a power failure, a user inserts an AC plug of an electrical appliance into the stated AC socket and can thus use the electrical appliance.

A current sensor CT is disposed in the coupled AC output path, and the current sensor CT notifies the second control unit 12b of the detected current value.

Fig. 1 illustrates an example in which AC power is supplied to the load 2 through a distribution line of a single-phase two-wire system. Alternatively, AC power may be supplied through a distribution line of a single-phase three-wire system. Specifically, a transformer with a single-phase two-wire system on a primary side and a single-phase three-wire system on a secondary side is inserted into the AC output path connected to the self-sustained output terminal of the first DC-AC converter 11a. A first voltage line (U-phase) is connected to one terminal of a secondary winding of the transformer, a second voltage line (V-phase) is connected to the other terminal of the secondary winding, and a neutral line (N-phase) is connected to a midpoint of the secondary winding.

A voltage that is one-half the voltage applied to a primary winding of the transformer can be extracted from between the U-phase and the N-phase and also from between the N-phase and the V-phase. When the voltage applied to the primary winding is 200 V, 100 V can be extracted from between the U-phase and the N-phase and also from between the N-phase and the V-phase. Here, 200 V can be extracted from between the U-phase and the V-phase.

One of the wires of the single-phase two-wire system connected to the self-sustained output terminal of the second DC-AC converter 11b is coupled to the first voltage line (U-phase), and the other wire is coupled to the second voltage line (V-phase). In the case of a single-phase three-wire system, the current sensor CT is disposed in each of the first voltage line (U-phase) and the second voltage line (V-phase), and the second control unit 12b is notified of the two current values detected by the respective current sensors. On the basis of the two current values, the second control unit 12b calculates a total current that flows in one load or two loads connected to a distribution line of a single-phase three-wire system.

In the self-sustained operation mode, the first control unit 12a notifies the second control unit 12b of the remaining capacity of the first storage battery 21a. In addition, the first control unit 12a sets a target value of an output voltage of the first DC-AC converter 11a to a predetermined voltage value (e.g., 100 V/200 V). A driving circuit of an inverter circuit within the first DC-AC converter 11a adaptively varies the duty ratio of the inverter circuit such that the output voltage value of the first DC-AC converter 11a is kept at the target voltage value.

In the self-sustained operation mode, the second control unit 12b acquires, from the current sensor CT, a load current IL being supplied to the load 2. The load current IL is a total current of an AC output current being output from the self-sustained output terminal of the first DC-AC converter 11a and an AC output current being output from the self-sustained output terminal of the second DC-AC converter 11b.

In addition, the second control unit 12b estimates the remaining capacity of the second storage battery 21b on the basis of the monitor data acquired from the second monitoring unit 22b. The second control unit 12b also acquires the remaining capacity of the first storage battery 21a from the first control unit 12a.

The second control unit 12b determines a target value of an output current of the second DC-AC converter 11b on the basis of the load current IL, the remaining capacity of the first storage battery 21a, and the remaining capacity of the second storage battery 21b and sets the determined target value into the second DC-AC converter 11b. A driving circuit of an inverter circuit within the second DC-AC converter 11b adaptively varies the duty ratio of the inverter circuit such that the output current value of the second DC-AC converter 11b is kept at the target current value.

The second control unit 12b determines the target value of the output current of the second DC-AC converter 11b such that the remaining capacity of the first storage battery 21a and the remaining capacity of the second storage battery 21b approach each other. For example, the second control unit 12b determines the target value on the basis of the load current IL and the ratio between the remaining capacity of the first storage battery 21a and the remaining capacity of the second storage battery 21b. Specifically, first, the second control unit 12b determines the ratio between the current to be supplied from the first storage battery 21a and the current to be supplied from the second storage battery 21b, of the total current to be supplied to the load 2 from the first storage battery 21a and the second storage battery 21b, in accordance with the ratio between the remaining capacity of the first storage battery 21a and the remaining capacity of the second storage battery 21b. Then, the second control unit 12b determines the target value of the output current of the second DC-AC converter 11b by multiplying the detected load current IL by the proportion of the current to be supplied from the second storage battery 21b.

For example, when the remaining capacity of the first storage battery 21a is 40 [Ah] and the remaining capacity of the second storage battery 21b is 10 [Ah], the proportion of the current to be supplied from the second storage battery 21b is 20%. When the first storage battery 21a is regarded as a main storage battery and the second storage battery 21b is regarded as an auxiliary storage battery, the auxiliary storage battery supplies power to the load 2 at an assist rate of 20%. When seen from the first DC-AC converter 11a, the load 2 appears to be reduced by the amount of the current to be supplied from the auxiliary storage battery. Of the total current consumed at the load 2, supplied from the main storage battery is the current that is less by the current to be supplied from the auxiliary storage battery. The main storage battery continues to output power unless an overloaded state arises.

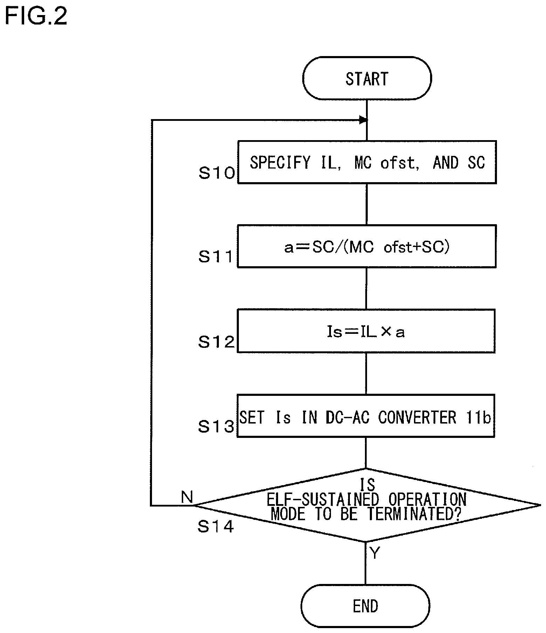

Fig. 2 is a flowchart illustrating an example of the operation of the power storage system 1 in the self-sustained operation mode according to the first embodiment. In the foregoing descriptions, an example in which the remaining capacity of the main storage battery and the remaining capacity of the auxiliary storage battery reach a lower discharge limit value substantially simultaneously has been illustrated. In the flowchart, the remaining capacity of the main storage battery is given an offset. In other words, the target value of the output current of the second DC-AC converter 11b is determined such that the remaining capacity of the main storage battery reaches the lower limit value + offset value when the remaining capacity of the auxiliary storage battery reaches the lower limit.

This control may be implemented by treating a remaining capacity MC ofst obtained by subtracting an offset value OFST from an actual remaining capacity MC of the main storage battery as the remaining capacity of the main storage battery in the calculation of the above-described current ratio between the main storage battery and the auxiliary storage battery.

The second control unit 12b specifies the load current IL [A], the remaining capacity MC ofst [Ah] of the main storage battery in which the offset is taken into account, and a remaining capacity SC [Ah] of the auxiliary storage battery (S10) . The load current IL [A] is acquired from the current sensor CT. The remaining capacity MC ofst [Ah] of the main storage battery in which the offset is taken into account is obtained by subtracting the offset value OFST from the remaining capacity MC of the main storage battery acquired from the first control unit 12a. The remaining capacity SC [Ah] of the auxiliary storage battery is obtained on the basis of the monitor data acquired from the second monitoring unit 22b.

The second control unit 12b calculates, as an assist rate a [%] of the auxiliary storage battery, the proportion of the remaining capacity SC [Ah] of the auxiliary storage battery relative to the total remaining capacity obtained by adding the remaining capacity MC ofst [Ah] of the main storage battery in which the offset is taken into account and the remaining capacity SC [Ah] of the auxiliary storage battery (S11). The second control unit 12b calculates a current value Is to be supplied from the auxiliary storage battery by multiplying the load current IL by the assist rate a [%] (S12) . The second control unit 12b sets the calculated current value Is into the second DC-AC converter 11b as the target current value (S13).

The processes in step S10 to step S13 described above are repeatedly executed (N in S14) until the self-sustained operation mode is terminated (Y in S14). The power consumption at the load 2 varies. Thus, the load current IL [A], the remaining capacity MC ofst [Ah] of the main storage battery in which the offset is taken into account, and the remaining capacity SC [Ah] of the auxiliary storage battery are specified in a predetermined cycle (S10), and the current value Is to be supplied from the auxiliary storage battery is calculated (S12) . Thus, the current value Is that is constantly being updated is set in the second DC-AC converter 11b (S13), and the current output from the first DC-AC converter 11a also varies constantly.

As described thus far, according to the first embodiment, the output currents of the main storage battery and the auxiliary storage battery connected in parallel are determined such that the remaining capacities of the main storage battery and the auxiliary storage battery reach the lower limit substantially simultaneously in the self-sustained operation mode. Thus, a situation in which the remaining capacity of the main storage battery reaches the lower limit first can be prevented. Accordingly, backup power can continue to be supplied to the load 2 from the storage batteries for as long duration as possible.

Even if the capacity of the auxiliary storage battery is remaining when the remaining capacity of the storage battery on the main side specifying the load voltage has reached the lower limit, it becomes impossible to supply power to the load 2. Therefore, the remaining capacity of the main storage battery needs to be prevented from reaching the lower limit before the remaining capacity of the auxiliary storage battery reaches the lower limit. In this respect, according to the present embodiment, the amount of current output to the load 2 from the main storage battery and the amount of current output to the load 2 from the auxiliary storage battery are adjusted in accordance with the ratio between the remaining capacity of the main storage battery and the remaining capacity of the auxiliary storage battery. Thus, the remaining capacities of the main storage battery and the auxiliary storage battery can be brought to the lower limit substantially simultaneously. If the remaining capacity of the main storage battery is given an offset, the remaining capacity of the main storage battery can be prevented more reliably from reaching the lower limit before the remaining capacity of the auxiliary storage battery reaches the lower limit.

When the remaining capacity of the auxiliary storage battery reaches the lower limit before the remaining capacity of the main storage battery reaches the lower limit, the discharge from the main storage battery can be continued. However, from the viewpoint of continuing to supply power to the load 2 even when a malfunction occurs in either of the system from the main storage battery to the load 2 and the system from the auxiliary storage battery to the load 2, it is desirable to keep the state in which the power can be supplied from both the main storage battery and the auxiliary storage battery as much as possible.

When the main storage battery and the auxiliary storage battery are supplying power to different loads in the grid-connected mode, there may be a case in which the remaining capacities of the main storage battery and the auxiliary storage battery differ to a great extent when a switch is made to the self-sustained operation mode due to a power failure. In such a case, if control is performed to make the amount of current output from the main storage battery to the load 2 and the amount of current output from the auxiliary storage battery to the load 2 equal to each other, the timings at which the remaining capacities of the main storage battery and the auxiliary storage battery reach the lower limit become mismatched to a great extent. According to the present embodiment, such a situation can also be prevented.

In the first embodiment, a configuration can also be employed in which the first DC-DC converter 13a for a storage battery and the second DC-DC converter 13b for a storage battery are omitted, the first DC-AC converter 11a and the first storage battery 21a are directly connected to each other, and the second DC-AC converter 11b and the second storage battery 21b are directly connected to each other. In this case, the voltage value or the current value of the first storage battery 21a is all specified by the first DC-AC converter 11a, and the voltage value or the current value of the second storage battery 21b is all specified by the second DC-AC converter 11b.

### (Second Embodiment)

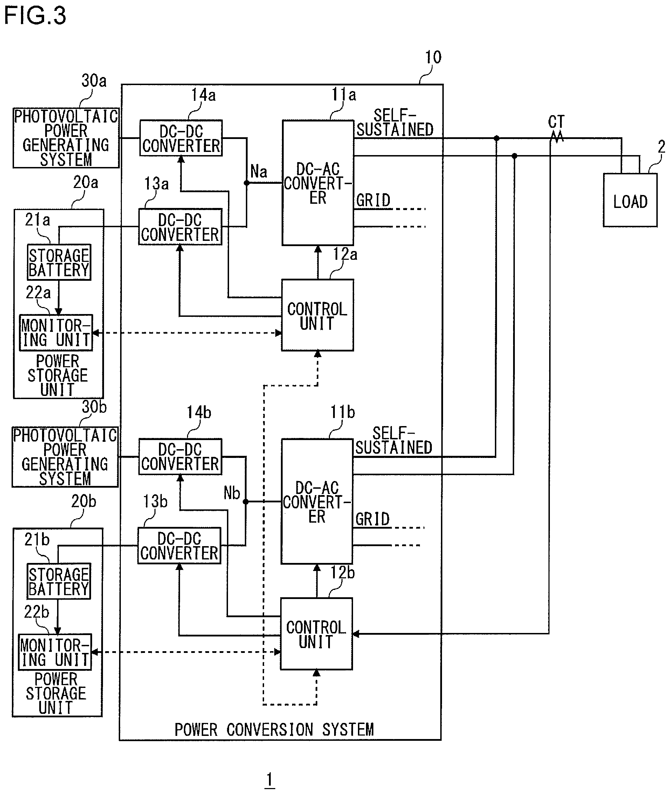

Fig. 3 illustrates a configuration of a power storage system 1 according to a second embodiment of the present invention. The power storage system 1 according to the second embodiment includes, in addition to the constituent elements of the power storage system 1 according to the first embodiment illustrated in Fig. 1, a first photovoltaic power generating system 30a, a first DC-DC converter 14a for a solar cell, a second photovoltaic power generating system 30b, and a second DC-DC converter 14b for a solar cell.

The first photovoltaic power generating system 30a includes a plurality of solar cells connected in series-parallel, converts the solar energy to power, and outputs the converted power. The first DC-DC converter 14a for a solar cell converts the DC power output from the first photovoltaic power generating system 30a to DC power of a voltage value set by the first control unit 12a and outputs the converted DC power. In a case in which the first DC-DC converter 14a for a solar cell is provided with an MPPT (Maximum Power Point Tracking) function, the first DC-DC converter 14a for a solar cell determines the voltage value to enable the first photovoltaic power generating system 30a to generate power at a maximum power point.

An output path of the first DC-DC converter 14a for a solar cell is connected to a node Na between the first DC-AC converter 11a and the first DC-DC converter 13a for a storage battery. In other words, a power generating current of the first photovoltaic power generating system 30a is added to the charging current/discharging current of the first storage battery 21a, and the resulting current is output to a DC terminal of the first DC-AC converter 11a.

The configurations and the operations of the second photovoltaic power generating system 30b and the second DC-DC converter 14b for a solar cell are similar to the configurations and the operations of the first photovoltaic power generating system 30a and the first DC-DC converter 14a for a solar cell, respectively. The power generating capacity of the photovoltaic power generating system may differ between the first photovoltaic power generating system 30a and the second photovoltaic power generating system 30b.

Fig. 3 illustrates an example in which AC power is supplied to the load 2 through a distribution line of a single-phase two-wire system. Alternatively, as described above, AC power may be supplied through a distribution line of a single-phase three-wire system.

In the power storage system 1 in which the first photovoltaic power generating system 30a and the second photovoltaic power generating system 30b are provided, as in the second embodiment, the amount of power generated in the first photovoltaic power generating system 30a and the second photovoltaic power generating system 30b needs to be taken into consideration in the calculation of the assist rate a described above. The first photovoltaic power generating system 30a and the first storage battery 21a are in a DC-link, and thus the amount of power generated in the first photovoltaic power generating system 30a can be estimated from the charging/discharging amount of the first storage battery 21a in the self-sustained operation mode. In a similar manner, the amount of power generated in the second photovoltaic power generating system 30b can be estimated from the charging/discharging amount of the second storage battery 21b.

In the self-sustained operation mode, the first control unit 12a estimates the charging/discharging amount and the remaining capacity of the first storage battery 21a on the basis of the current value and the voltage value output from the first monitoring unit 22a. Whether the first storage battery 21a is being charged or discharged can be identified on the basis of the direction of the current. The first control unit 12a notifies the second control unit 12b of the estimated charging/discharging amount of the first storage battery 21a and the remaining capacity of the first storage battery 21a. In addition, similarly to the first embodiment, the first control unit 12a sets the target value of the output voltage of the first DC-AC converter 11a to a predetermined voltage value (e.g., 100 V/200 V).

The second control unit 12b estimates the charging/discharging power and the remaining capacity of the second storage battery 21b on the basis of the current value and the voltage value output from the second monitoring unit 22b. The second control unit 12b determines the target value of the output current of the second DC-AC converter 11b on the basis of the load current IL, the remaining capacity of the first storage battery 21a, the charging/discharging amount of the first storage battery 21a, the remaining capacity of the second storage battery 21b, and the charging/discharging amount of the second storage battery 21b and sets the determined target value into the second DC-AC converter 11b. Similarly to the first embodiment, in the second embodiment as well, the second control unit 12b determines the target value of the output current of the second DC-AC converter 11b such that the remaining capacity of the first storage battery 21a and the remaining capacity of the second storage battery 21b approach each other.

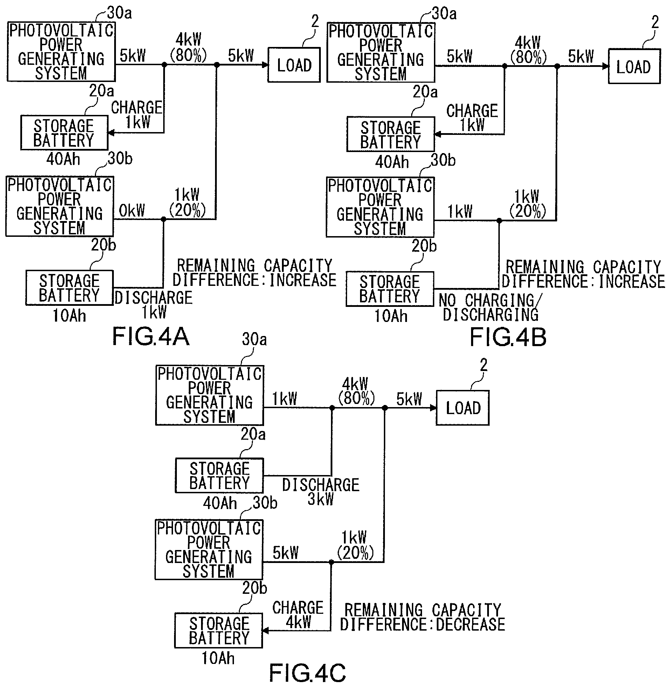

Figs. 4(a) to 4(c) schematically illustrate control examples of the power storage system 1 in the self-sustained operation mode according to the second embodiment. In the examples illustrated in Figs. 4 (a) to 4 (c), the remaining capacity of the main storage battery is 40 [Ah], and the remaining capacity of the auxiliary storage battery is 10 [Ah] . On the basis of the calculation of the assist rate a illustrated in the first embodiment, 1 [kW] is supplied to the load 2 from the second DC-AC converter 11b, and 4 [kW] is supplied to the load 2 from the first DC-AC converter 11a. This assist rate a (20%) is a value calculated without the amount of power generated in the first photovoltaic power generating system 30a and the second photovoltaic power generating system 30b taken into consideration.

Fig. 4(a) illustrates an example in which the first photovoltaic power generating system 30a generates power of 5 [kW] and the second photovoltaic power generating system 30b generates no power. The output power of the first DC-AC converter 11a is regulated to 4 [kW]. Thus, when the first photovoltaic power generating system 30a generates power of 5 [kW], 1 [kW] is charged to the main storage battery. The output power of the second DC-AC converter 11b is regulated to 1 [kW]. Thus, when the second photovoltaic power generating system 30b generates no power, 1 [kW] is discharged from the auxiliary storage battery. In this example, the main storage battery is charged, and the auxiliary storage battery is discharged. Thus, the difference between the remaining capacities of the main storage battery and the auxiliary storage battery increases.

Fig. 4(b) illustrates an example in which the first photovoltaic power generating system 30a generates power of 5 [kW] and the second photovoltaic power generating system 30b generates power of 1 [kW]. The output power of the first DC-AC converter 11a is regulated to 4 [kW]. Thus, when the first photovoltaic power generating system 30a generates power of 5 [kW], 1 [kW] is charged to the main storage battery. The output power of the second DC-AC converter 11b is regulated to 1 [kW]. Thus, when the second photovoltaic power generating system 30b generates power of 1 [kW], 1 [kW] need not be discharged from the auxiliary storage battery. However, the auxiliary storage battery is not being charged while the main storage battery is being charged. Thus, in this example as well, the difference between the remaining capacities of the main storage battery and the auxiliary storage battery increases.

Fig. 4(c) illustrates an example in which the first photovoltaic power generating system 30a generates power of 1 [kW] and the second photovoltaic power generating system 30b generates power of 5 [kW]. The output power of the first DC-AC converter 11a is regulated to 4 [kW]. Thus, when the first photovoltaic power generating system 30a generates power of 1 [kW], 3 [kW] is discharged from the main storage battery. The output power of the second DC-AC converter 11b is regulated to 1 [kW]. Thus, when the second photovoltaic power generating system 30b generates power of 5 [kW], 4 [kW] is charged to the auxiliary storage battery. In this example, the main storage battery is discharged, and the auxiliary storage battery is charged. Thus, the difference between the remaining capacities of the main storage battery and the auxiliary storage battery decreases.

As in the examples illustrated in Figs. 4(a) and 4(b), if the assist rate a is determined on the basis of the ratio between the remaining capacities of the main storage battery and the auxiliary storage battery, the difference between the remaining capacities of the main storage battery and the auxiliary storage battery may increase in some cases. On the basis of the above, the second control unit 12b determines the assist rate a as follows.

When the first photovoltaic power generating system 30a and the second photovoltaic power generating system 30b are both generating power, the second control unit 12b determines the assist rate a on the basis of the remaining capacity of the main storage battery, the remaining capacity of the auxiliary storage battery, the amount of power generated in the first photovoltaic power generating system 30a, and the amount of power generated in the second photovoltaic power generating system 30b.

When neither the first photovoltaic power generating system 30a nor the second photovoltaic power generating system 30b is generating power, the second control unit 12b determines the assist rate a on the basis of the remaining capacity of the main storage battery and the remaining capacity of the auxiliary storage battery. This determination processing is similar to the determination processing according to the first embodiment.

When only the photovoltaic power generating system 30 that is connected to a storage battery with a smaller remaining capacity is generating power, the second control unit 12b performs control to allocate the power generated in the stated photovoltaic power generating system 30 to charge the storage battery with a smaller remaining capacity. For example, the second control unit 12b determines the assist rate a to bring the discharge from the storage battery with a smaller remaining capacity to zero. The assist rate a is increased in a case in which the storage battery with a smaller remaining capacity is the main storage battery, and the assist rate a is decreased in a case in which the stated storage battery is the auxiliary storage battery.

When only the photovoltaic power generating system 30 that is connected to a storage battery with a larger remaining capacity is generating power, the second control unit 12b determines the assist rate a to bring the discharge from the storage battery with a smaller remaining capacity to a minimum. The assist rate a is maximized in a case in which the storage battery with a smaller remaining capacity is the main storage battery, and the assist rate a is minimized in a case in which the stated storage battery is the auxiliary storage battery.

Hereinafter, a specific example of a method for calculating the assist rate a according to the second embodiment will be illustrated. In this example, the state of the power storage system 1 is classified into nine patterns on the basis of charging/discharging power MBP [W] of the main storage battery, charging/discharging power SBP [W] of the auxiliary storage battery, the remaining capacity MC ofst [Ah] of the main storage battery in which the offset is taken into account, and the remaining capacity SC [Ah] of the auxiliary storage battery. A positive value of the charging/discharging power MBP of the main storage battery means charging, and a negative value of the charging/discharging power MBP means discharging. This applies similarly to the charging/discharging power SBP of the auxiliary storage battery.

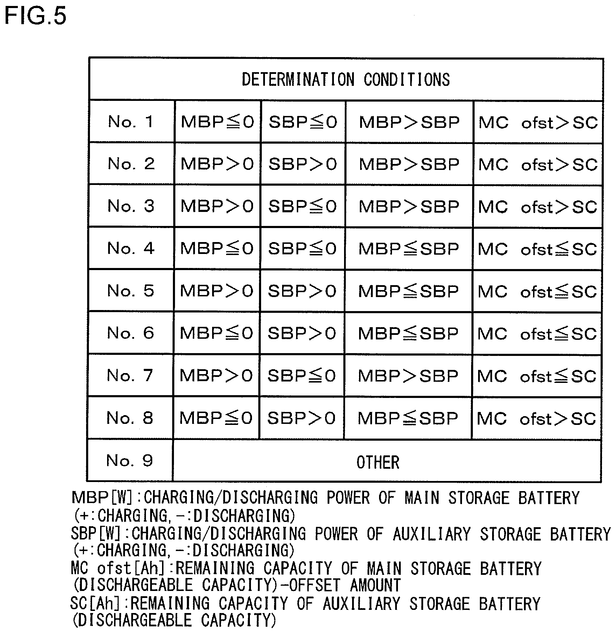

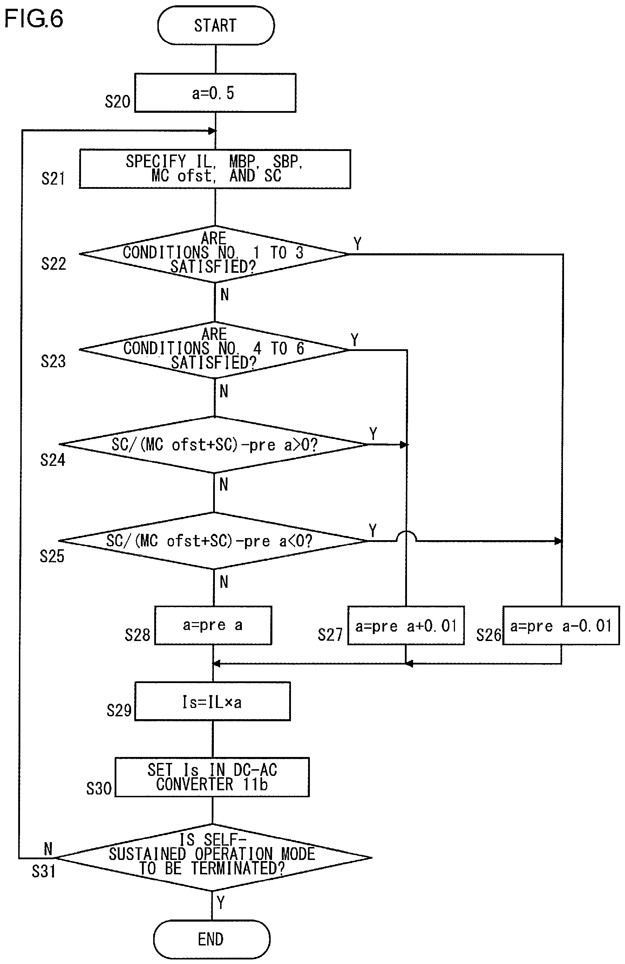

Fig. 5 is a table summarizing determination conditions to be used in the specific example of the method for calculating the assist rate a according to the second embodiment. Fig. 6 is a flowchart for describing the specific example of the method for calculating the assist rate a according to the second embodiment. In this specific example, the variable range of the assist rate a is from 0.00 to 1.00 (0% to 100%), and the step width by which the assist rate a varies per instance of updating is 0.01 (1%) .

In the flowchart illustrated in Fig. 6, the second control unit 12b sets the initial value of the assist rate a to 0.5 (S20). In other words, the ratio between the current output from the first DC-AC converter 11a and the current output from the second DC-AC converter 11b starts from 1:1. Alternatively, as the initial value of the assist rate a, a value corresponding to the ratio between the remaining capacities of the main storage battery and the auxiliary storage battery may instead be used.

The second control unit 12b specifies the load current IL [A], the charging/discharging power MBP [W] of the main storage battery, the remaining capacity MC ofst [Ah] of the main storage battery, the charging/discharging power SBP [W] of the auxiliary storage battery, and the remaining capacity SC [Ah] of the auxiliary storage battery (S21).

The second control unit 12b determines whether any of the conditions 1 to 3 is applicable by referring to the table illustrated in Fig. 5 (S22). If any one of the conditions 1 to 3 is applicable (Y in S22), the second control unit 12b decrements the assist rate a by 1 unit. Specifically, the second control unit 12b subtracts 0.01 from an assist rate pre a of a previous cycle to calculate a new assist rate a (S26). The conditions 1 to 3 correspond to the case in which the difference between the remaining capacities of the main storage battery and the auxiliary storage battery increases (the remaining capacity of the auxiliary storage battery decreases relative to the remaining capacity of the main storage battery), and lowering the assist rate a suppresses the relative decrease of the remaining capacity of the auxiliary storage battery.

If none of the conditions 1 to 3 is applicable (N in S22), the second control unit 12b determines whether any one of the conditions 4 to 6 is applicable (S23). If any one of the conditions 4 to 6 is applicable (Y in S23), the second control unit 12b increments the assist rate a by 1 unit. Specifically, the second control unit 12b adds 0.01 to an assist rate pre a of a previous cycle to calculate a new assist rate a (S27). The conditions 4 to 6 correspond to the case in which the difference between the remaining capacities of the main storage battery and the auxiliary storage battery increases (the remaining capacity of the main storage battery decreases relative to the remaining capacity of the auxiliary storage battery), and raising the assist rate a suppresses the relative decrease of the remaining capacity of the main storage battery.

If none of the conditions 1 to 6 is applicable (N in S23), the second control unit 12b substitutes the most recently acquired remaining capacity MC ofst [Ah] of the main storage battery in which the offset is taken into account and the most recently acquired remaining capacity SC [Ah] of the auxiliary storage battery into an arithmetic expression [a = SC/(MC ofst + SC)] to calculate the latest actual assist rate a.

The second control unit 12b compares the latest actual assist rate a with the assist rate pre a of the previous cycle. If the latest actual assist rate a is greater than the assist rate pre a of the previous cycle (Y in S24), the second control unit 12b adds 0.01 to the assist rate pre a of the previous cycle to calculate a new assist rate a (S27). In this specific example, the assist rate a is increased or decreased by units of 0.01. Thus, the assist rate pre a of the previous cycle is not changed immediately to the latest actual assist rate a but brought closer to the latest actual assist rate a by 0.01.

If the calculated latest actual assist rate a is smaller than the assist rate pre a of the previous cycle (N in S24 and Y in S25), the second control unit 12b subtracts 0.01 from the assist rate pre a of the previous cycle to calculate a new assist rate a (S26).

If the calculated latest actual assist rate a is equal to the assist rate pre a of the previous cycle (N in S24 and N in S25), the second control unit 12b sets the assist rate pre a of the previous cycle as-is as a new assist rate a (S28) . In this case, the assist rate a need not be modified.

The second control unit 12b multiples the load current IL by the new assist rate a to calculate the current value Is to be supplied from the second DC-AC converter 11b (S29) . The second control unit 12b sets the calculated current value Is into the second DC-AC converter 11b as the target current value (S30).

The processes in step S21 to step S30 described above are repeatedly executed (N in S31) until the self-sustained operation mode is terminated (Y in S31). The power consumption at the load 2, the amount of power generated in the first photovoltaic power generating system 30a, and the amount of power generated in the second photovoltaic power generating system 30b vary. Thus, the load current IL [A], the charging/discharging power MBP [W] of the main storage battery, the charging/discharging power SBP [W] of the auxiliary storage battery, the remaining capacity MC ofst [Ah] of the main storage battery in which the offset is taken into account, and the remaining capacity SC [Ah] of the auxiliary storage battery are specified in a predetermined cycle (S21), and the current value Is to be supplied from the second DC-AC converter 11b is calculated (S29). Thus, the current value Is that is constantly being updated is set in the second DC-AC converter 11b (S30), and the current output from the first DC-AC converter 11a also varies constantly.

The assist rate a varies only in units of 0.01 per cycle in this specific example. Thus, variations of the currents output from the second DC-AC converter 11b and the first DC-AC converter 11a are gentle.

As described thus far, according to the second embodiment, an advantageous effect similar to that of the first embodiment is obtained also in the power storage system 1 provided with the first photovoltaic power generating system 30a and the second photovoltaic power generating system 30b. In other words, with the amount of power generated in the first photovoltaic power generating system 30a and the second photovoltaic power generating system 30b taken into consideration, the remaining capacities of the main storage battery and the auxiliary storage battery connected in parallel can be made to reach the lower limit substantially simultaneously in the self-sustained operation mode. Accordingly, backup power can continue to be supplied to the load 2 from both the first DC-AC converter 11a and the second DC-AC converter 11b for as long duration as possible.

In addition, by continuing to update the target current value of the second DC-AC converter 11b constantly with the load current IL and a variation in the amount of power generated in the photovoltaic power generating systems taken into consideration, the timings at which the remaining capacities of the main storage battery and the auxiliary storage battery reach the lower limit can be made to coincide with each other with high accuracy.

In addition, control is performed to gradually bring the target current value of the second DC-AC converter 11b closer to the target current value that reflects the most recent condition. Thus, hunting of the output current of the second DC-AC converter 11b can be suppressed. Consequently, hunting of the output current of the first DC-AC converter 11a can also be suppressed.

Thus far, the present invention has been described on the basis of embodiments. These embodiments are merely illustrative, and it should be appreciated by a person skilled in the art that various modifications can be made to the combinations of the constituent elements and the processing processes of the embodiments and that such modifications also fall within the scope of the present invention.

In the example described in the second embodiment, a photovoltaic power generating system is used as a power generating apparatus that generates power from renewable energy. Alternatively, other power generating apparatuses, such as a wind power generating apparatus or a micro-hydroelectric generating apparatus, may be used. These power generating apparatuses all generate power in a variable amount in association with a change in the natural environment. In a case in which an output of a power generating apparatus is AC, a DC-DC converter in a later stage in the power generating apparatus is replaced with an AC-DC converter.

In the example described in the second embodiment, the assist rate a is increased or decreased in a step width of 0.01 (1%). Alternatively, the assist rate a may be increased or decreased by a smaller step width or by a larger step width. An architect determines the step width of the assist rate a and the update interval of the target current value of the second DC-AC converter 11b on the basis of the specifications of the storage batteries, the solar cell, the DC-AC converters, and so on, the experimental values, and the simulation values. The architect may employ control that instantly matches the target current value of the second DC-AC converter 11b with the target current value that reflects the most recent condition.

In the example described in the first and second embodiments, the first control unit 12a and the second control unit 12b are provided on separate substrates. Alternatively, the first control unit 12a and the second control unit 12b may be integrally mounted on a single substrate. This case renders the communication processing between the first control unit 12a and the second control unit 12b unnecessary.

In the example described in the first and second embodiments, the first DC-AC converter 11a, the first control unit 12a, the first DC-DC converter 13a for a storage battery, (the first DC-DC converter 14a for a solar cell), the second DC-AC converter 11b, the second control unit 12b, the second DC-DC converter 13b for a storage battery, and (the second DC-DC converter 14b for a solar cell) are collectively installed in a single housing. In this respect, the first DC-AC converter 11a, the first control unit 12a, the first DC-DC converter 13a for a storage battery, and (the first DC-DC converter 14a for a solar cell) may be disposed in one housing; and the second DC-AC converter 11b, the second control unit 12b, the second DC-DC converter 13b for a storage battery, and (the second DC-DC converter 14b for a solar cell) may be disposed in another housing. For example, in a case in which the second power storage unit 20b and the second photovoltaic power generating system 30b are to be added at a later time, the second DC-AC converter 11b, the second control unit 12b, the second DC-DC converter 13b for a storage battery, and (the second DC-DC converter 14b for a solar cell) are housed in a housing different from a housing in which the first DC-AC converter 11a, the first control unit 12a, the first DC-DC converter 13a for a storage battery, and (the first DC-DC converter 14a for a solar cell) are housed, and the first control unit 12a and the second control unit 12b are connected to each other by a communication line.

The control according to the first and second embodiments can also be applied to a power storage system 1 in which three or more storage batteries are connected in parallel in the self-sustained operation mode. The output current values of two or more DC-AC converters connected to respective two or more auxiliary storage batteries may be determined such that the remaining capacities of the three or more storage batteries reach the lower limit substantially simultaneously.

The embodiments may be specified by the following items.

[Item 1] A power conversion system (10) comprising:
   a first DC-AC conversion unit (11a) that converts DC power supplied from a first power storage unit (20a) to AC power;
   a first control unit (12a) that acquires monitor data from the first power storage unit (20a) and controls the first DC-AC conversion unit (11a);
   a second DC-AC conversion unit (11b) that converts DC power supplied from a second power storage unit (20b) to AC power; and
   a second control unit (12b) that acquires monitor data from the second power storage unit (20b) and controls the second DC-AC conversion unit (11b), wherein
   the first DC-AC conversion unit (11a) and the second DC-AC conversion unit (11b) each have an AC output path, and the AC output paths are coupled together, a total current of an AC output current of the first DC-AC conversion unit (11a) and an AC output current of the second DC-AC conversion unit (11b) being supplied to a load (2),
   the first control unit (12a) sets an output voltage of the first DC-AC conversion unit (11a) and notifies the second control unit (12b) of a remaining capacity of the first power storage unit (20a), and
   the second control unit (12b) controls an output current of the second DC-AC conversion unit (11b) to bring the remaining capacity of the first power storage unit (20a) and a remaining capacity of the second power storage unit (20b) closer to each other on the basis of the total current supplied to the load (2), the remaining capacity of the first power storage unit (20a), and the remaining capacity of the second power storage unit (20b).

   According to the above, power can continue to be supplied to the load (2) for longer duration from both the first power storage unit (20a) and the second power storage unit (20b).
[Item 2] The power conversion system (10) according to Item 1, wherein
   the second control unit (12b) controls the output current of the second DC-AC conversion unit (11b) in accordance with the total current supplied to the load (2) and a ratio between the remaining capacity of the first power storage unit (20a) and the remaining capacity of the second power storage unit (20b).
   According to the above, timings at which the remaining capacities of the first power storage unit (20a) and the second power storage unit (20b) reach a lower limit can be made to substantially coincide with each other.
[Item 3] The power conversion system (10) according to Item 1, wherein
   a DC output path from a first power generating apparatus (30a) that generates power from renewable energy is connected to a node (Na) between the first DC-AC conversion unit (11a) and the first power storage unit (20a),
   a DC output path from a second power generating apparatus (30b) that generates power from renewable energy is connected to a node (Nb) between the second DC-AC conversion unit (11b) and the second power storage unit (20b),
   the first control unit (12a) notifies the second control unit (12b) of the remaining capacity of the first power storage unit (20a) and a discharging amount from the first power storage unit (20a) /a charging amount to the first power storage unit (20a), and
   the second control unit (12b) controls the output current of the second DC-AC conversion unit (11b) to bring the remaining capacity of the first power storage unit (20a) and the remaining capacity of the second power storage unit (20b) closer to each other on the basis of the total current supplied to the load (2), the remaining capacity of the first power storage unit (20a), the discharging amount from the first power storage unit (20a)/the charging amount to the first power storage unit (20a), the remaining capacity of the second power storage unit (20b), and the discharging amount from the second power storage unit (20b) /the charging amount to the second power storage unit (20b).
   According to the above, in a configuration in which the power generating apparatuses (30a and 30b) are connected, power can continue to be supplied to the load (2) for longer duration from both the first DC-AC converter (11a) and the second DC-AC converter (11b).
[Item 4] The power conversion system (10) according to any one of Items 1 to 3, wherein
   the second control unit (12b) controls the output current such that the remaining capacity of the first power storage unit (20a) results in a value obtained by adding an offset value to a lower limit value when the remaining capacity of the second power storage unit (20b) reaches the lower limit.
   According to the above, the remaining capacity of the first power storage unit (20a) can be prevented more reliably from reaching the lower limit before the remaining capacity of the second power storage unit (20b) reaches the lower limit.
[Item 5] The power conversion system (10) according to any one of Items 1 to 4, wherein
   the second control unit (12b) controls the output current of the second DC-AC conversion unit (11b).
   According to the above, an environmental change that happens every moment can be reflected immediately onto a target value of the output current of the second DC-AC conversion unit (11b).
[Item 6] The power conversion system (10) according to any one of Items 1 to 5, wherein
   the second control unit (12b) gradually brings the target value of the output current of the second DC-AC conversion unit (11b) estimated one unit earlier to a most recently estimated output current of the second DC-AC conversion unit (11b).
   According to the above, variations in the output currents of the second DC-AC converter (11b) and the first DC-AC converter (11a) can be made gentle.
[Item 7] A power conversion system (10) comprising:
   a first DC-AC conversion unit (11a) that converts DC power supplied from a first power storage unit (20a) to AC power;
   a second DC-AC conversion unit (11b) that converts DC power supplied from a second power storage unit (20b) to AC power; and
   control units (12a and 12b) that acquire monitor data from the first power storage unit (20a) and the second power storage unit (20b) and control the first DC-AC conversion unit (11a) and the second DC-AC conversion unit (11b), wherein
   the first DC-AC conversion unit (11a) and the second DC-AC conversion unit (11b) each have an AC output path, and the AC output paths are coupled together, a total current of an AC output current of the first DC-AC conversion unit (11a) and an AC output current of the second DC-AC conversion unit (11b) being supplied to a load (2),
   the control units (12a and 12b) control an output current of the second DC-AC conversion unit (11b) to bring a remaining capacity of the first power storage unit (20a) and a remaining capacity of the second power storage unit (20b) closer to each other on the basis of the total current supplied to the load (2), the remaining capacity of the first power storage unit (20a), and the remaining capacity of the second power storage unit (20b).

   According to the above, power can continue to be supplied to the load (2) for longer duration from both the first power storage unit (20a) and the second power storage unit (20b).
[Item 8] A control device (12b) that controls a first DC-AC conversion unit (11a) and a second DC-AC conversion unit (11b), the first DC-AC conversion unit (11a) being a DC-AC conversion unit having an output voltage set therein and converting DC power supplied from a first power storage unit (20a) to AC power, the second DC-AC conversion unit (11b) converting DC power supplied from a second power storage unit (20b) to AC power, wherein
   the first DC-AC conversion unit (11a) and the second DC-AC conversion unit (11b) each have an AC output path, and the AC output paths are coupled together, a total current of an AC output current of the first DC-AC conversion unit (11a) and an AC output current of the second DC-AC conversion unit (11b) being supplied to a load (2), and
   the control device (12b) controls an output current of the second DC-AC conversion unit (11b) to bring a remaining capacity of the first power storage unit (20a) and a remaining capacity of the second power storage unit (20b) closer to each other on the basis of the total current supplied to the load (2), the remaining capacity of the first power storage unit (20a), and the remaining capacity of the second power storage unit (20b).
   According to the above, power can continue to be supplied to the load (2) for longer duration from both the first power storage unit (20a) and the second power storage unit (20b).

### [DESCRIPTION OF THE REFERENCE NUMERALS]

1 power storage system, 2 load, 10 power conversion system, 11a first DC-AC converter, 12a first control unit, 13a first DC-DC converter for storage battery, 14a first DC-DC converter for solar cell, 20a first power storage unit, 21a first storage battery, 22a first monitoring unit, 11b second DC-AC converter, 12b second control unit, 13b second DC-DC converter for storage battery, 14b second DC-DC converter for solar cell, 20b second power storage unit, 21b second storage battery, 22b second monitoring unit, CT current sensor, 30a first photovoltaic power generating system, 30b second photovoltaic power generating system

### [INDUSTRIAL APPLICABILITY]

The present invention can be used in a power storage system in which a plurality of storage batteries are connected in parallel.

## Claims

1. A power conversion system, comprising:
a first DC-AC conversion unit that converts DC power supplied from a first power storage unit to AC power;
a first control unit that acquires monitor data from the first power storage unit and controls the first DC-AC conversion unit;
a second DC-AC conversion unit that converts DC power supplied from a second power storage unit to AC power; and
a second control unit that acquires monitor data from the second power storage unit and controls the second DC-AC conversion unit, wherein
the first DC-AC conversion unit and the second DC-AC conversion unit each have an AC output path, and the AC output paths are coupled together, a total current of an AC output current of the first DC-AC conversion unit and an AC output current of the second DC-AC conversion unit being supplied to a load,
the first control unit sets an output voltage of the first DC-AC conversion unit and notifies the second control unit of a remaining capacity of the first power storage unit, and
the second control unit controls an output current of the second DC-AC conversion unit to bring the remaining capacity of the first power storage unit and a remaining capacity of the second power storage unit closer to each other on the basis of the total current supplied to the load, the remaining capacity of the first power storage unit, and the remaining capacity of the second power storage unit.

2. The power conversion system according to claim 1, wherein
the second control unit controls the output current of the second DC-AC conversion unit in accordance with the total current supplied to the load and a ratio between the remaining capacity of the first power storage unit and the remaining capacity of the second power storage unit.

3. The power conversion system according to claim 1, wherein
a DC output path from a first power generating apparatus that generates power from renewable energy is connected to a node between the first DC-AC conversion unit and the first power storage unit,
a DC output path from a second power generating apparatus that generates power from renewable energy is connected to a node between the second DC-AC conversion unit and the second power storage unit,
the first control unit notifies the second control unit of the remaining capacity of the first power storage unit and a discharging amount from the first power storage unit/a charging amount to the first power storage unit, and
the second control unit controls the output current of the second DC-AC conversion unit to bring the remaining capacity of the first power storage unit and the remaining capacity of the second power storage unit closer to each other on the basis of the total current supplied to the load, the remaining capacity of the first power storage unit, the discharging amount from the first power storage unit/the charging amount to the first power storage unit, the remaining capacity of the second power storage unit, and the discharging amount from the second power storage unit/the charging amount to the second power storage unit.

4. The power conversion system according to any one of claims 1 to 3, wherein
the second control unit determines a target value of the output current such that the remaining capacity of the first power storage unit results in a value obtained by adding an offset value to a lower limit value when the remaining capacity of the second power storage unit reaches the lower limit.

5. The power conversion system according to any one of claims 1 to 4, wherein
the second control unit calculates the output current of the second DC-AC conversion unit at a predetermined time interval.

6. The power conversion system according to any one of claims 1 to 5, wherein
the second control unit gradually brings the target value of the output current of the second DC-AC conversion unit estimated one unit earlier to a most recently estimated output current of the second DC-AC conversion unit.

7. A power conversion system, comprising:
a first DC-AC conversion unit that converts DC power supplied from a first power storage unit to AC power;
a second DC-AC conversion unit that converts DC power supplied from a second power storage unit to AC power; and
a control unit that acquires monitor data from the first power storage unit and the second power storage unit and controls the first DC-AC conversion unit and the second DC-AC conversion unit, wherein
the first DC-AC conversion unit and the second DC-AC conversion unit each have an AC output path, and the AC output paths are coupled together, a total current of an AC output current of the first DC-AC conversion unit and an AC output current of the second DC-AC conversion unit being supplied to a load, and
the control unit controls an output current of the second DC-AC conversion unit to bring a remaining capacity of the first power storage unit and a remaining capacity of the second power storage unit closer to each other on the basis of the total current supplied to the load, the remaining capacity of the first power storage unit, and the remaining capacity of the second power storage unit.

8. A control device that controls a first DC-AC conversion unit and a second DC-AC conversion unit, the first DC-AC conversion unit being a DC-AC conversion unit having an output voltage set therein and converting DC power supplied from a first power storage unit to AC power, the second DC-AC conversion unit converting DC power supplied from a second power storage unit to AC power, wherein
the first DC-AC conversion unit and the second DC-AC conversion unit each have an AC output path, and the AC output paths are coupled together, a total current of an AC output current of the first DC-AC conversion unit and an AC output current of the second DC-AC conversion unit being supplied to a load, and
the control device controls an output current of the second DC-AC conversion unit to bring a remaining capacity of the first power storage unit and a remaining capacity of the second power storage unit closer to each other on the basis of the total current supplied to the load, the remaining capacity of the first power storage unit, and the remaining capacity of the second power storage unit.
